# FASCICULE DE BREVET EUROPEEN

(11) **EP 3 735 527 B1**
(45) Date de publication et mention de la délivrance du brevet: **12.01.2022**
(21) Numéro de dépôt: 19710742.8
(22) Date de dépôt: 13.02.2019
(51) Int. Cl.: F02K 1/80, F02C 7/28, F01D 9/06, F02C 7/25

(54) **VIROLE EXTERIEURE DE CARTER INTERMEDIAIRE POUR TURBOMACHINE D'AERONEF A DOUBLE FLUX, COMPRENANT DES DISPOSITIFS AMELIORES D'ETANCHEITE A L'AIR ET DE RESISTANCE AU FEU**
AUSSENMANTEL EINES ZWISCHENGEHÄUSES FÜR EIN ZWEISTROM-TURBINENTRIEBWERK FÜR EIN FLUGZEUG MIT VERBESSERTEN LUFTDICHTENDEN UND FEUERBESTÄNDIGEN VORRICHTUNGEN
OUTER SHROUD OF AN INTERMEDIATE CASING FOR A DUAL FLOW TURBINE ENGINE FOR AN AIRCRAFT, COMPRISING IMPROVED AIR-SEALING AND FIRE-RESISTANCE DEVICES

(30) Priorité: 14.02.2018 FR 1851253
(43) Date de publication de la demande: 11.11.2020
(73) Titulaire: SAFRAN AIRCRAFT ENGINES, 75015 Paris (FR)
(72) Inventeur: JACON, Bruno, Alexandre, Didier, 77550 MOISSY-CRAMAYEL (FR); ACHBARI, Baghdad, 77550 MOISSY-CRAMAYEL (FR); BROAGE, Thomas, Claude, 77550 MOISSY-CRAMAYEL (FR); GODIN, Florent, Robert, André, 77550 MOISSY-CRAMAYEL (FR); ROUDIL, Joël, François, 77550 MOISSY-CRAMAYEL (FR); SIMONOTTI, Hervé, 77550 MOISSY-CRAMAYEL (FR)
(74) Mandataire: Brevalex
(86) Numéro de dépôt international: PCT/FR2019/050311
(87) Numéro de publication internationale: WO 2019/158854

(56) Documents cités:
- WO-A1-2012/022900

## Description

### DOMAINE TECHNIQUE

L'invention concerne les fonctions d'étanchéité à l'air et de résistance au feu entre un compartiment de soufflante, et la veine secondaire d'une turbomachine d'aéronef à double flux. Elle concerne plus particulièrement la réalisation de ces fonctions au niveau d'une jonction entre la virole extérieure d'un carter intermédiaire de la turbomachine, et un bras traversant radialement la veine secondaire.

L'invention s'applique à tout type de turbomachine à double flux, et en particulier à un turboréacteur.

### ETAT DE LA TECHNIQUE ANTERIEURE

Dans une turbomachine d'aéronef à double flux, il est habituellement prévu, en aval de la soufflante, un ou plusieurs bras traversant radialement la veine secondaire. Ce bras est typiquement agencé de manière à relier un compartiment de soufflante situé autour de la virole extérieure d'un carter intermédiaire, à un compartiment inter-veine. Ces deux compartiments logent de manière classique des équipements et des servitudes, tandis que le bras interposé entre eux deux permet le passage de différents éléments tels que des câbles électriques, et/ou des canalisations fluidiques.

L'extrémité radialement externe d'un tel bras est fixée sur la virole extérieure du carter intermédiaire, au niveau d'une ouverture traversante de cette virole, à l'aide d'un organe de raccordement du type plaque trouée de raccordement. Le bord aval annulaire de cette virole extérieure est interrompu, ce qui l'amène à présenter deux surfaces d'extrémité circonférentielle se faisant face, et délimitant entre elles un espace de logement de l'extrémité radialement externe d'un tel bras.

Cependant, la présence de l'ouverture sur la virole extérieure génère des problèmes d'étanchéité à l'air et de résistance au feu au niveau des deux surfaces d'extrémité circonférentielle du bord aval annulaire de la virole. Cela s'explique tout d'abord par le fait qu'un jeu est observé entre chacune de ces deux surfaces d'extrémité circonférentielle, et l'extrémité radialement externe du bras. Cela s'explique également par le fait que la plaque trouée se trouve plaquée radialement sous le bord aval annulaire de virole, contre une zone annulaire creuse ouverte radialement vers l'intérieur et définie par la surface radialement interne du bord aval. Le passage entre la plaque trouée et cette surface radialement interne du bord aval, ainsi que le jeu mentionné ci-dessus, forment des sources de fuite d'air de la veine secondaire vers le compartiment de soufflante, ainsi que des risques de propagation de feu de ce compartiment vers la veine.

WO 2012/022900 divulgue une turbomachine avec un inverseur de poussée de l'art anterieur.

### RESUME DE L'INVENTION

Pour résoudre au moins partiellement les problèmes évoqués ci-dessus relatifs aux solutions de l'art antérieur, l'invention a tout d'abord pour objet une virole extérieure de carter intermédiaire pour turbomachine d'aéronef à double flux, selon les caractéristiques de la revendication 1.

De préférence, le dispositif d'étanchéité à l'air et de résistance au feu comprend :
- une partie d'étanchéité à l'air et de résistance au feu comportant :
   - un premier organe de contact agencé dans la zone annulaire creuse du bord aval annulaire de virole, ce premier organe de contact présentant une surface de contact de forme complémentaire de celle de ladite surface radialement interne délimitant cette zone annulaire creuse ;
   - un second organe de contact se projetant à partir du premier organe de contact et s'étendant circonférentiellement au-delà de la surface d'extrémité circonférentielle de la zone de jonction concernée, en direction de l'autre surface d'extrémité circonférentielle, le second organe de contact étant en appui sur l'extrémité circonférentielle de la zone de jonction concernée, et destinée à être enserrée entre cette extrémité circonférentielle et l'extrémité radialement externe du bras

De préférence, le dispositif d'étanchéité à l'air et de résistance au feu comprend également :
- un moyen élastique de rappel plaquant le premier organe de contact dans la zone annulaire creuse, le moyen élastique de rappel comprenant une première extrémité fixée sur l'extrémité circonférentielle de la zone de jonction concernée, et une seconde extrémité opposée fixée sur le premier organe de contact.

Par conséquent, le dispositif d'étanchéité à l'air et de résistance au feu s'avère performant, et s'intègre parfaitement dans son environnement, sans risquer de s'étendre de façon inappropriée dans une zone prohibée.

En effet, l'utilisation d'un moyen élastique de rappel permet de s'assurer que le premier organe de contact soit correctement plaqué dans la zone creuse du bord aval de la virole, malgré d'éventuels défauts de précision résultant des tolérances dimensionnelles associées aux éléments en présence. Le moyen élastique de rappel procure ainsi une pression de contact au premier organe dans la zone creuse, pression qui est ensuite accentuée en fonctionnement de la turbomachine, par la pression additionnelle de l'air circulant dans la veine secondaire.

Le premier organe de contact constitue de plus, à la manière d'un bouchon, une barrière physique empêchant l'air et le feu de transiter circonférentiellement par cette zone creuse du bord aval de la virole. De son côté, le second moyen de contact constitue une barrière physique empêchant l'air et le feu de transiter radialement par le jeu délimité entre l'extrémité radialement externe du bras, et la surface d'extrémité circonférentielle de bord aval interrompu de la virole. Par conséquent, le dispositif adopté permet avantageusement d'offrir une étanchéité à l'air ainsi qu'une résistance au feu entre le compartiment de soufflante et la veine secondaire, au niveau des zones de jonction sensibles résultant de l'interruption du bord aval annulaire de la virole.

Enfin, cette conception préserve l'espace de logement destiné à recevoir l'extrémité radiale externe du bras, permettant ainsi à ce dernier d'être installé ultérieurement et sans contrainte, par exemple par un tiers.

De préférence, le premier organe de contact est un patin, le second organe de contact est une lamelle, et le moyen élastique de rappel est un ressort à lame. Néanmoins, les premier et second organes de contact ainsi que le moyen élastique de rappel peuvent être réalisées sous d'autres formes, sans sortir du cadre de l'invention.

Dans la suite, il sera fait référence au patin, à la lamelle, et au ressort à lame, mais les caractéristiques techniques décrites ci-après s'appliquent également lorsque les premier et second organes de contact, ainsi que le moyen élastique de rappel, sont réalisés sous d'autres formes.

De préférence, la surface de contact du patin épouse, localement au niveau de ce dernier, l'intégralité d'un secteur angulaire de la surface radialement interne délimitant la zone annulaire creuse, et ce patin présente de préférence une partie radialement interne en dehors de ladite zone annulaire creuse. En d'autres termes, au moins un secteur angulaire de cette zone annulaire creuse est entièrement comblé par le patin, pour former une barrière physique encore plus performante.

De préférence, le patin présente, dans sa partie située radialement vers l'extérieur par rapport à la lamelle, une surface d'extrémité circonférentielle de patin se situant sensiblement dans un même plan que la surface d'extrémité circonférentielle du bord aval annulaire de virole. Cela permet de préserver au plus juste l'espace de logement destiné à recevoir l'extrémité radiale externe du bras.

De préférence, la lamelle comporte une zone de raccord avec le patin, d'épaisseur réduite. Grâce à cette épaisseur diminuée, la zone de raccord confère une souplesse permettant un pivotement entre le patin et la lamelle. Ainsi, cette jonction souple se déforme facilement dans le domaine élastique, et ne vient s'opposer que faiblement à l'effort de plaquage généré sur le patin par le ressort à lame.

De préférence, ladite partie d'étanchéité à l'air et de résistance au feu est formée par la superposition, selon la direction radiale, d'au moins une couche en matériau élastomère, de préférence en matériau élastomère silicone, et d'au moins une couche fibreuse de céramique, de verre ou de meta-aramide (poly(m-phénylèneisophtalamide)). D'autres types de couches sont néanmoins possibles, sans sortir du cadre de l'invention. Il est noté qu'une couche de tissu céramique s'avère particulièrement efficace pour la fonction de résistance au feu, tandis qu'une couche de fibres de verre permet de raidir l'empilement, et de limiter le fluage d'élastomère dans le plan orthogonal à la direction de superposition des couches, en cas de sollicitation mécanique selon cette dernière direction. Enfin, une couche de fibres de meta-aramide permet également un tel raidissement, et peut être agencée au niveau de la surface de contact du patin pour limiter les risques d'endommagement contre les portions vives de la virole extérieure.

De préférence, ladite partie d'étanchéité à l'air et de résistance au feu comporte au moins une couche fibreuse de verre s'étendant à travers le patin et la lamelle.

De préférence, chaque extrémité circonférentielle présente un lamage formant un siège pour la lamelle du dispositif d'étanchéité à l'air et de résistance au feu. Cela permet d'obtenir facilement une surface sensiblement plane pour le support de l'extrémité radialement externe du bras, tout en étant composée de plusieurs éléments distincts superposés.

De préférence, ladite partie d'étanchéité à l'air et de résistance au feu est réalisée par moulage par compression, et la surface de contact du patin est préférentiellement usinée.

L'invention a également pour objet une turbomachine d'aéronef à double flux, comprenant une virole extérieure de carter intermédiaire telle que décrite ci-dessus, ainsi qu'un bras traversant radialement une veine secondaire de la turbomachine, la turbomachine présentant un compartiment de soufflante ainsi qu'un compartiment inter-veine reliés par ledit bras, dont l'extrémité radialement externe est plaquée contre la surface radialement externe des deux extrémités circonférentielles, et contre les seconds organes de contact associés à ces deux extrémités.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
- la figure 1 est une vue en perspective d'un turboréacteur à double flux selon un mode de réalisation préféré de l'invention ;
- la figure 2 représente une vue partielle en perspective d'une virole extérieure du carter intermédiaire équipant le turboréacteur montré sur la figure 1 ;
- la figure 3 représente une vue agrandie en perspective d'une partie de la virole extérieure montrée sur la figure précédente ;
- la figure 4 représente une vue en perspective similaire à celle de la figure 2, avec un bras traversant la veine secondaire du turboréacteur ;
- la figure 5 représente une vue de dessus de celle de la figure 4 ;
- la figure 6 représente une vue en perspective similaire à celle de la figure 3, avec le bras représenté ;
- la figure 7 est une vue en perspective de la partie d'étanchéité à l'air et de résistance au feu d'un dispositif faisant partie intégrante de la virole extérieure ;
- la figure 8 est une vue en perspective d'un ressort à lame destiné à coopérer avec la partie montrée sur la figure 7 ; et
- la figure 9 représente une vue en coupe transversale de la partie montrée sur la figure 7.

### EXPOSE DETAILLE DE MODES DE REALISATION PREFERES

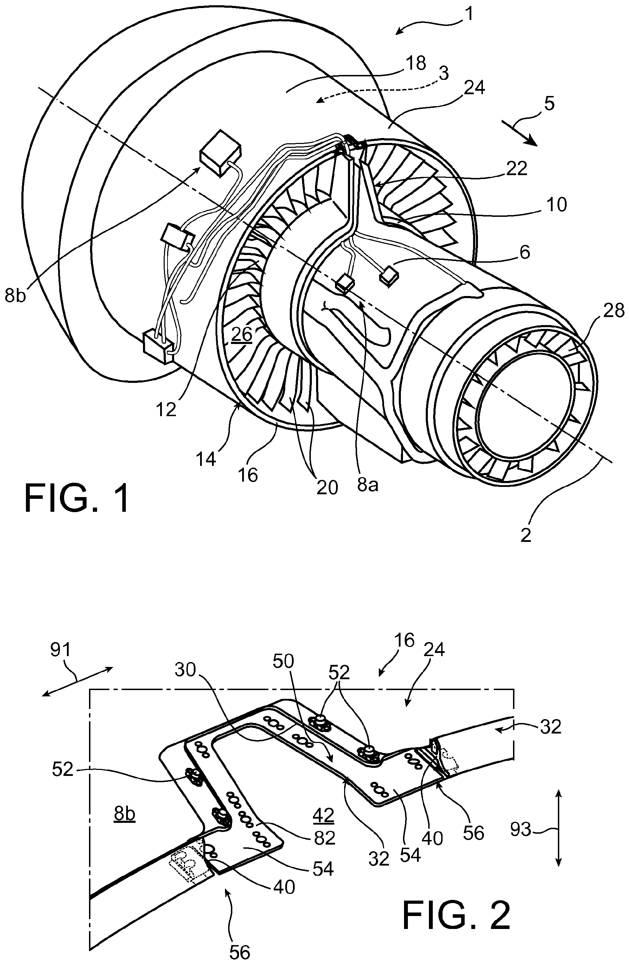

En référence tout d'abord à la figure 1, il est représenté une turbomachine 1 d'aéronef, selon un mode de réalisation préféré de l'invention. Il s'agit ici d'un turboréacteur à double flux et à double corps.

La turbomachine 1 présente un axe central longitudinal 2, autour duquel s'étendent ses différents composants. Elle comprend, d'amont en aval selon une direction principale 5 d'écoulement des gaz à travers cette turbomachine, une soufflante 3 puis un générateur de gaz formé classiquement par des compresseurs, une chambre de combustion et des turbines. Ces éléments du générateur de gaz sont entourés par un carter central 6, également dénommé carter « core », qui délimite radialement vers l'intérieur un compartiment inter-veine 8a. Ce compartiment 8a est délimité par ailleurs radialement vers l'extérieur par un ou plusieurs capotages, dont un anneau amont 10 qui est le seul représenté sur la figure 1. L'anneau amont 10 est agencé dans la continuité aval d'un moyeu 12 d'un carter intermédiaire 14 du turboréacteur. Le carter intermédiaire 14 comporte également une virole extérieure 16 se situant dans la continuité aval d'un carter de soufflante 18. Il comporte aussi des aubes directrices de sortie 20, agencées en aval des aubes de soufflante et reliant le moyeu 12 à la virole extérieure 16.

Le carter de soufflante 18 et la virole extérieure 16 délimitent ensemble, radialement vers l'intérieur, un compartiment de soufflante 8b. Ce compartiment 8b est délimité par ailleurs radialement vers l'extérieur par un ou plusieurs capotages (non représentés), faisant partie d'une nacelle du turboréacteur. Tout comme le compartiment inter-veine 8a, ce compartiment 8b loge des équipements et des servitudes, comme cela est largement connu de l'art antérieur.

Un ou plusieurs bras 22 sont prévus pour relier les deux compartiments. Ce sont par exemple deux bras 22 qui équipent le turboréacteur, respectivement agencés dans des positions horaires dites à 12h et à 6h. Ces bras 22 sont creux, et ils permettent par exemple de faire circuler des câbles électriques, et/ou des canalisations fluidiques. Plus précisément, ces bras relient la partie aval 24 de la virole extérieure 16, à l'anneau amont 10. Pour ce faire, ils traversent une veine secondaire 26 du turboréacteur, cette veine étant en partie délimitée vers l'extérieur par la virole 16 ainsi que par des capotages (non représentés) disposés en aval de celle-ci, et en partie délimitée vers l'intérieur par l'anneau amont 10 du compartiment inter-veine 8a. La veine secondaire 26 s'ajoute à une veine primaire 28, qui transite de manière classique par le générateur de gaz.

L'invention concerne la jonction entre les bras 22 et la virole extérieure 16 du carter intermédiaire 14. Dans la suite de la description, le bras concerné sera celui adoptant la position horaire à 12h, mais l'invention peut bien évidemment s'appliquer à tout autre bras 22 du turboréacteur 1.

En référence à présent aux figures 2 à 6, il va être décrit un mode de réalisation préféré de la virole extérieure 16, ainsi que sa coopération avec le bras 22. La virole extérieure 16 présente une direction circonférentielle 91 ainsi qu'une direction radiale 93, en rapport avec l'axe central longitudinal 2.

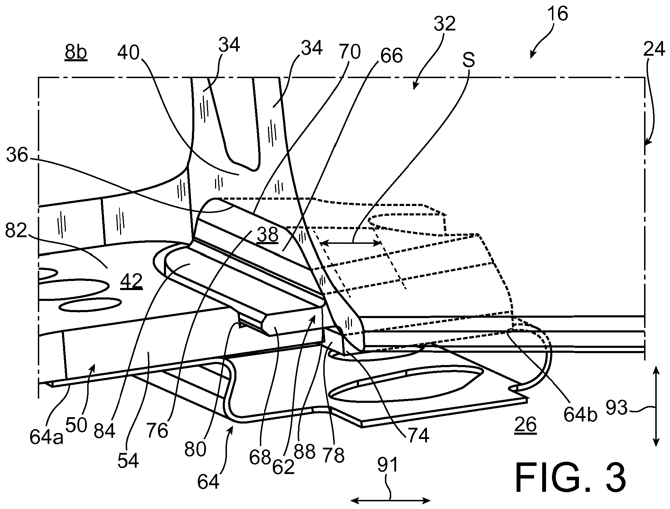

La partie aval annulaire 24 de la virole 16 est pourvue d'une ouverture de virole 30, qui s'apparente à une encoche s'ouvrant axialement vers l'aval. L'ouverture 30 traverse ainsi radialement la partie aval annulaire 24, en adoptant une forme proche de celle de la section du bras 22 à recevoir. En s'ouvrant vers l'aval, l'ouverture 30 traverse également un bord aval annulaire 32 de la virole, dont la géométrie est particulièrement complexe, notamment en raison du fait que ce bord 32 participe au caractère structural de la virole. Ce bord 32 présente deux lèvres ou rainures annulaires 34 s'étendant radialement vers l'extérieur, comme cela est le mieux visible sur la figure 3. Sur cette figure, il est également représenté une surface radialement interne 36 du bord 32, qui délimite une zone annulaire creuse 38 ouverte radialement vers l'intérieur. La surface 36 est concave, de section par exemple en forme générale de U évasé radialement vers l'intérieur. Sa profondeur reste faible, par exemple comprise entre 3 et 5 mm, cette dimension dépendant des grandes tolérances résultant de la fabrication par moulage de la virole extérieure 16.

Le bord aval annulaire 32 n'est donc pas continu sur 360°, puisqu'il est interrompu par l'ouverture 30. De par cette interruption, le bord 32 présente deux surfaces d'extrémité circonférentielle 40 qui se font face, et qui en étant écartées circonférentiellement l'une de l'autre, délimitent entre elles un espace de logement 42 destiné à la réception d'une extrémité radialement externe 44 du bras 22.

Pour assurer l'interface entre le bras 22 et la partie aval 24 de la virole, celle-ci comporte également un organe de raccordement, ici une plaque trouée de raccordement 50, de préférence métallique et plane, ou légèrement courbe. Dans ce mode de réalisation préféré, la plaque 50 présente une forme générale de U ou de V, qui suit grossièrement le contour de l'ouverture 30 en restreignant la section de passage de celle-ci, et en étant ouvert axialement au même niveau que l'ouverture 30. La plaque trouée 50 est fixée sur la partie aval 24 à l'aide de moyens de fixation conventionnels, tels que des boulons 52. Alternativement, la plaque trouée 50 pourrait présenter une forme s'étendant selon une ligne fermée, par exemple une forme sensiblement rectangulaire ou trapézoïdale.

La plaque 50 est agencée radialement vers l'intérieur par rapport à la virole. Elle présente deux extrémités circonférentielles de plaque 54, qui sont agencées respectivement aux deux extrémités du U ou du V, en s'étendant également circonférentiellement dans des directions opposées. Chacune de ces deux extrémités circonférentielles de plaque 54 est associée à l'une des deux surfaces d'extrémité circonférentielle 40, définissant respectivement deux zones de jonction 56 sensibles à l'étanchéité à l'air et à la résistance au feu. Plus précisément, il est fait en sorte qu'il ne se produise pas ou peu d'échange d'air entre le compartiment de soufflante 8b et la veine secondaire 26, notamment pour éviter les fuites en dehors de cette veine, et il est également recherché à éviter qu'un feu initié dans le compartiment 8b se propage dans la veine 26.

L'invention prévoit ainsi un dispositif particulier 60 au niveau de chacune de ces deux zones de jonction 56, pour satisfaire les fonctions d'étanchéité à l'air et de résistance au feu. A cet égard, pour ce qui concerne l'étanchéité, il est par exemple recherché à limiter les fuites à un débit maximal de 0,54 g/s. Pour ce qui concerne la résistance au feu, en plus de se conformer aux exigences normatives ISO 2685-1998 et AC 20-135, les conditions les plus pénalisantes sont considérées, à savoir qu'il est recherché une tenue au feu en vol et une tenue au feu au sol. Cela implique notamment de concevoir une solution assurant la fonction anti-feu dans les conditions suivantes :
- température de flamme : 1100 ± 80°C ;
- vibration : ± 0,4 mm sous une fréquence de 50 Hz ;
- pression : 0,4 bar pendant les 5 premières minutes du test feu ;
- durée du test : 15 min, décomposée en 2 phases :
   5 min : Surpression appliquée ; et
   10 min : Pression atmosphérique ;
- auto-extinction dans un temps limité.

Dans la suite de la description, il sera seulement décrit l'un des deux dispositifs 60, étant entendu que les deux dispositifs peuvent présenter des conceptions identiques ou similaires, en étant par exemple conçus symétriquement par rapport à un plan longitudinal du turboréacteur passant par l'axe 2.

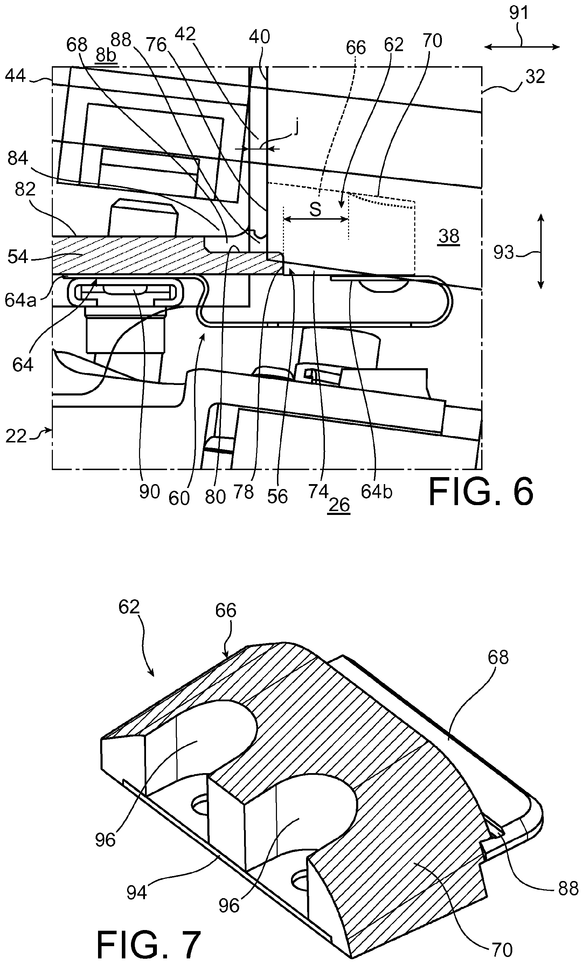

Le dispositif 60 est ainsi destiné à conférer une étanchéité à l'air et une résistance au feu entre le compartiment de soufflante 8b, et la veine secondaire 26. Il est formé d'une part à l'aide d'une partie fonctionnelle 62 d'étanchéité à l'air et de résistance au feu, et d'autre part à l'aide d'un ressort à lame 64 plaquant la partie 62 contre la virole extérieure 16. Plus précisément, la partie fonctionnelle 62 est devisée en deux portions solidaires l'une de l'autre, à savoir un patin 66 et une lamelle 68. Le patin 66 est agencé dans la zone annulaire creuse 38 du bord aval 32. Il présente une surface de contact 70 de forme complémentaire de celle de la surface radialement interne 36 délimitant cette zone 38, donc convexe et de section en forme générale de U évasé radialement vers l'intérieur. Le patin 66 comble, à la manière d'un bouchon, tout ou partie de la zone creuse 38 située à proximité de la surface d'extrémité circonférentielle 40. Comme cela est le mieux visible sur les figures 3 et 6, la surface de contact 70 du patin 66 épouse localement l'intégralité de la surface 36 sur au moins un secteur angulaire S de cette surface, ce secteur S étant centré sur l'axe 2. De plus, au niveau de ce secteur angulaire S, le patin 66 peut présenter une partie radialement interne 74 s'étendant au-delà de la zone annulaire creuse 38, c'est-à-dire en dehors de celle-ci comme cela est visible sur la figure 6. Sur cette même figure, il est montré que pour la partie du patin 66 située radialement vers l'extérieur par rapport à la lamelle 68, cette partie se termine par une surface d'extrémité circonférentielle 76 agencée sensiblement dans un même plan que la surface d'extrémité circonférentielle associée 40. Par conséquent, l'espace de logement 42 est préservé, et le dispositif 60 n'entrave ainsi aucunement l'assemblage ultérieur de l'extrémité radiale externe 44 du bras 22.

L'autre surface d'extrémité circonférentielle 78, qui se situe radialement vers l'intérieur par rapport à la lamelle 68, se situe quant à elle plus en retrait dans la direction circonférentielle 91, formant ainsi un renfoncement dans lequel s'insère la partie terminale de l'extrémité circonférentielle de plaque 54. Cette partie terminale forme d'ailleurs un lamage 80 qui remplit la fonction de siège pour la lamelle 68, reposant en effet sur ce lamage. La présence de ce dernier permet d'obtenir une surface sensiblement plane pour le support de l'extrémité radialement externe 44 du bras, cette surface étant effectivement formée par la surface radialement externe 82 des deux extrémités de plaque 54, ainsi que par la surface radialement externe 84 de deux lamelles associées 68 reposant dans leur lamage 80. Néanmoins, pour garantir l'étanchéité, les lamelles 68 dépassent radialement de la plaque 50 avant le montage du bras 22.

La lamelle 68 se projette à partir des surfaces 76, 78 du patin 66, en s'étendant circonférentiellement au-delà de la surface d'extrémité circonférentielle 40 du bord aval de virole 32. Cette projection s'effectue en direction de l'autre surface d'extrémité circonférentielle 40, afin que la lamelle 68 repose dans le lamage 80 qui se termine quant à lui à proximité de cette surface 40, voire jusqu'à légèrement pénétrer dans la zone creuse 38 du bord 32.

Après montage du bras 22 sur la plaque trouée 50 à l'aide de moyens conventionnels du type boulons (non référencés), la lamelle 68 se retrouve enserrée radialement entre la partie terminale de l'extrémité circonférentielle de plaque 54, et l'extrémité radialement externe 44 de ce bras 22.

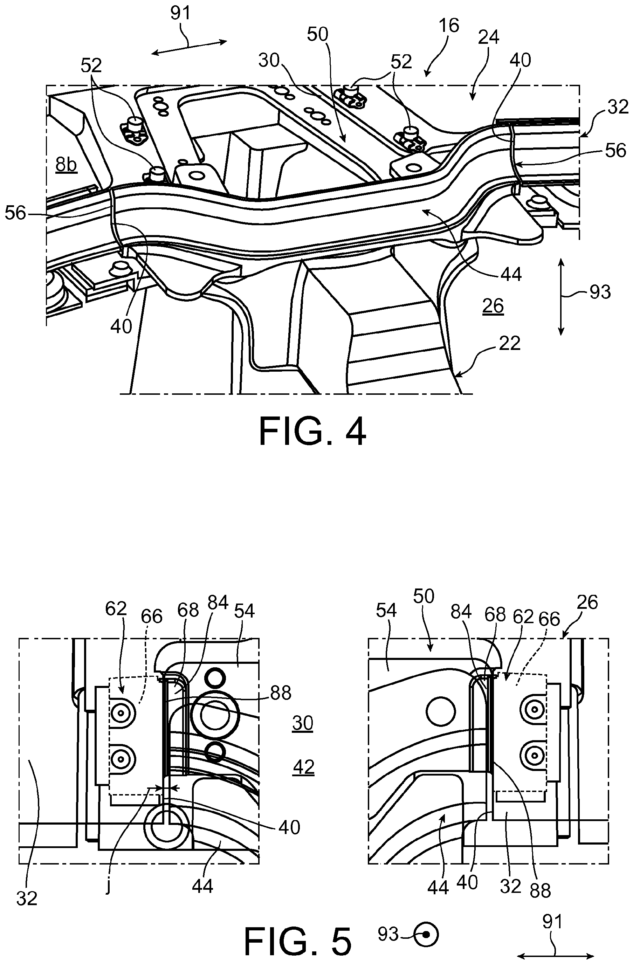

La lamelle 68 comporte une zone 88 de raccord avec le patin 66, agencée dans le jeu circonférentiel J entre la surface d'extrémité 40 du bord 32, et l'extrémité radiale externe 44 du bras 22. A cet égard, il est noté que cette extrémité 44 assure, malgré la présence du jeu J, une continuité de forme du bord aval annulaire 32, en reconstituant ce dernier dans l'espace de logement 42. Comme cela est le mieux visible sur la figure 4, cette extrémité 44 n'est cependant pas nécessairement cylindrique comme le bord 32, mais elle peut présenter une forme s'adaptant à la forme générale du bras 20.

De retour à la zone de raccord 88 agencée dans le jeu J, cette zone présente la particularité d'une épaisseur réduite par rapport au reste de la lamelle 68. Cette réduction d'épaisseur est retenue de manière à conférer une souplesse à la partie fonctionnelle 62, permettant un pivotement facilité entre la lamelle 68 et le patin 66 soumis à l'effort du ressort à lame 64.

En effet, le ressort 64 comprend une première extrémité 64a fixée sur l'extrémité circonférentielle de plaque 54 à l'aide d'un ou plusieurs boulons 90, ainsi qu'une seconde extrémité 64b opposée, fixée sur la partie radialement interne du patin 66. Par conséquent, le ressort à lame 64 plaque le patin dans la zone annulaire creuse 38, sur la surface 36, garantissant ainsi l'étanchéité et la fonction anti-feu. En particulier, cet effort de plaquage permet de réajuster la position relative du patin 66 et du bord 32 si celle-ci n'est pas adéquate du fait des tolérances dimensionnelles, et garantit un écrasement de ce patin dans la zone creuse. Cet effort d'écrasement est d'ailleurs accentué lors du fonctionnement de la turbomachine, par la pression du flux d'air circulant dans la veine secondaire de la turbomachine et s'appliquant contre le patin 66.

Pour assurer le montage de la seconde extrémité 64b sur le patin 66, ce dernier peut présenter une partie radialement interne en forme de plaque 94, comme cela est montré sur la figure 7. La plaque 94 est perforée pour le passage des éléments de fixation. Ces passages de la plaque débouchent sur des puits 96 qui s'étendent sur tout l'épaisseur du patin 66, jusqu'à sa surface de contact 70.

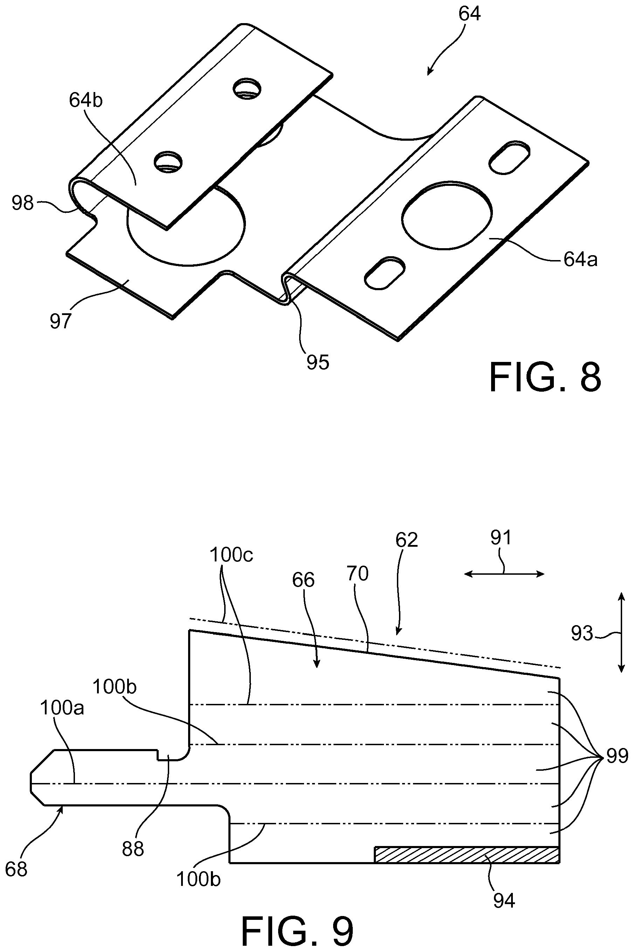

Le ressort à lame 64 est préférentiellement métallique, par exemple réalisé en Inconel 718^{®}. Il peut être obtenu par pliage / emboutissage, afin de présenter la forme détaillée montrée sur la figure 8. A partir de la première extrémité 64a, le ressort présente une première courbure 95, ici en forme de S. Le ressort se poursuit ensuite par une lame droite 97 ou légèrement courbe, destinée à être sensiblement parallèle à la lamelle 68 et à la plaque trouée 50, ainsi qu'aux extrémités 64a, 64b. Cette lame 97 est ensuite raccordée à la seconde extrémité 64b par une seconde courbure 98, ici en forme de C. Des perforations peuvent être prévues dans la lame 97 et les extrémités 64a, 64b, afin d'adapter les raideurs longitudinale et transversale du ressort.

Pour la fabrication de la partie fonctionnelle 62 du dispositif 60, il est préférentiellement mis en œuvre une technique de moulage par compression. Il peut s'agir d'un simple bloc élastomère, mais ce dernier est préférentiellement combiné à une ou plusieurs couches de fonctionnalités diverses.

Dans l'exemple représenté sur la figure 9, la partie 62 est formée par la superposition, dans la direction radiale 93, de couches en matériau élastomère 99 et plus préférentiellement en élastomère silicone, et de couches fonctionnelles fibreuses qui vont à présent être détaillées.

Il s'agit tout d'abord d'une ou de deux couches de toile de verre 100a, qui renforcent la rigidité de la partie 32, en traversant le patin 66 et la lamelle 68. Ensuite, il est prévu dans le patin 66 deux couches de résistance au feu 100b, agencées de part et d'autre de la couche 100a, et séparées de celle-ci par des couches en matériau élastomère silicone 99. Les couches 100b sont par exemple réalisées en fibre céramique. Elles sont agencées dans les zones du patin les plus exposées à la flamme. Le matériau élastomère silicone des couches 99 se dégradant et se transformant en silice en cas de chaleur importante, les toiles utilisées 100b permettent, grâce à leur maillage, de retenir ces particules dégradées.

L'alternance de couches peut être complétée en partie radialement externe du patin par une ou deux couches fibreuses d'aramide 100c, toujours pour renforcer la rigidité de l'ensemble. L'une de ces couches 100c peut même être revêtue sur la surface de contact 70, afin de limiter les risques d'endommagement du patin 66 contre les portions vives de la virole. Dans tous les cas, que cette surface de contact 70 soit ou non revêtue d'une couche de protection 100c, elle est préférentiellement usinée afin de présenter une géométrie plus précise garantissant un contact plus sûr dans la zone creuse du bord de virole.

Les couches 99, 100a-100c sont préférentiellement parallèles entre elles, et sensiblement parallèles à la direction circonférentielle 91 de la virole extérieure 16 sur laquelle le dispositif 60 est implanté. L'orientation des plis de tissus/toiles 100a-100c permet aussi de limiter la déformation de l'ensemble dans la direction circonférentielle 91, et donc de maintenir le patin 66 en dehors des frontières de l'espace de logement 42, durant le fonctionnement du turboréacteur. En effet, lorsque le patin 66 est comprimé selon la direction radiale 93, les couches fonctionnelles 100a-100c sont sollicitées en traction, et leur raideur limite le fluage des couches 99 en matériau élastomère silicone, dans la direction circonférentielle 91.

Bien entendu, diverses modifications peuvent être apportées par l'homme du métier à l'invention qui vient d'être décrite, uniquement à titre d'exemples non limitatifs et dont la portée est définie par les revendications annexées.

## Revendications

1. Virole extérieure (16) de carter intermédiaire (14) pour turbomachine d'aéronef à double flux, la virole comprenant :
- une partie aval annulaire (24) pourvue d'une ouverture de virole (30) traversant radialement la virole et s'ouvrant axialement vers l'aval de celle-ci, la partie aval comportant un bord aval annulaire de virole (32) dont une surface radialement interne (36) délimite une zone annulaire creuse (38) ouverte radialement vers l'intérieur, le bord aval annulaire (32) étant interrompu par l'ouverture de virole (30) de façon à présenter deux surfaces d'extrémité circonférentielle (40) se faisant face et délimitant entre elles un espace de logement (42) d'une extrémité radialement externe (44) d'un bras (22) destiné à traverser radialement une veine secondaire (26) de la turbomachine ;
- un organe de raccordement (50), de préférence formé par une plaque trouée de raccordement (50), fixé sur la partie aval annulaire (24) de la virole et agencé radialement vers l'intérieur par rapport à celle-ci, l'organe (50) étant également destiné à être fixé audit bras (22) et formant deux extrémités circonférentielles (54) respectivement associées aux deux surfaces d'extrémité circonférentielle (40) du bord aval annulaire de virole (32), afin de définir respectivement deux zones de jonction (56) ;
**caractérisée en ce que** la virole comporte en outre, associé à chaque zone de jonction (56), un dispositif (60) d'étanchéité à l'air et de résistance au feu.

2. Virole extérieure selon la revendication 1, **caractérisée en ce que** le dispositif (60) d'étanchéité à l'air et de résistance au feu comprend :
- une partie (62) d'étanchéité à l'air et de résistance au feu comportant :
- un premier organe de contact (66) agencé dans la zone annulaire creuse (38) du bord aval annulaire de virole (32), ce premier organe de contact présentant une surface de contact (70) de forme complémentaire de celle de ladite surface radialement interne (36) délimitant cette zone annulaire creuse (38) ;
- un second organe de contact (68) se projetant à partir du premier organe de contact (66) et s'étendant circonférentiellement au-delà de la surface d'extrémité circonférentielle (40) de la zone de jonction concernée, en direction de l'autre surface d'extrémité circonférentielle (40), le second organe de contact étant en appui sur l'extrémité circonférentielle (54) de la zone de jonction concernée, et destinée à être enserrée entre cette extrémité circonférentielle (54) et l'extrémité radialement externe (44) du bras (22).

3. Virole extérieure selon la revendication 2, **caractérisée en ce que** le dispositif (60) d'étanchéité à l'air et de résistance au feu comporte également :
- un moyen élastique de rappel (64) plaquant le premier organe de contact (66) dans la zone annulaire creuse (38), le moyen élastique de rappel (64) comprenant une première extrémité (64a) fixée sur l'extrémité circonférentielle (54) de la zone de jonction concernée, et une seconde extrémité opposée (64b) fixée sur le premier organe de contact (66).

4. Virole extérieure selon la revendication 3, **caractérisée en ce que** le premier organe de contact (66) est un patin, **en ce que** le second organe de contact (68) est une lamelle, et **en ce que** le moyen élastique de rappel (64) est un ressort à lame.

5. Virole extérieure selon la revendication 4, **caractérisée en ce que** la surface de contact du patin (66) épouse, localement au niveau de ce dernier, l'intégralité d'un secteur angulaire (S) de la surface radialement interne (36) délimitant la zone annulaire creuse (38), et **en ce que** le patin (66) présente de préférence une partie radialement interne (74) en dehors de ladite zone annulaire creuse (38).

6. Virole extérieure selon la revendication 4 ou la revendication 5, **caractérisée en ce que** le patin (66) présente, dans sa partie située radialement vers l'extérieur par rapport à la lamelle (68), une surface d'extrémité circonférentielle de patin (76) se situant sensiblement dans un même plan que la surface d'extrémité circonférentielle (40) du bord aval annulaire de virole (32).

7. Virole extérieure selon l'une quelconque des revendications 4 à 6, **caractérisée en ce que** la lamelle (68) comporte une zone de raccord (88) avec le patin, d'épaisseur réduite.

8. Virole extérieure selon l'une quelconque des revendications 4 à 7 **caractérisée en ce que** ladite partie (62) d'étanchéité à l'air et de résistance au feu est formée par la superposition, selon la direction radiale (93), d'au moins une couche en matériau élastomère (99), de préférence en matériau élastomère silicone, et d'au moins une couche fibreuse de céramique (100b), de verre (100a) ou de meta-aramide (100c).

9. Virole extérieure selon la revendication précédente, **caractérisée en ce que** ladite partie (62) d'étanchéité à l'air et de résistance au feu comporte au moins une couche fibreuse de verre (100a) s'étendant à travers le patin (66) et la lamelle (68).

10. Virole extérieure selon l'une quelconque des revendications 4 à 9, **caractérisée en ce que** chaque extrémité circonférentielle (54) présente un lamage (80) formant un siège pour la lamelle (68) du dispositif (60) d'étanchéité à l'air et de résistance au feu.

11. Virole extérieure selon l'une quelconque des revendications 4 à 10, **caractérisée en ce que** ladite partie (62) d'étanchéité à l'air et de résistance au feu est réalisée par moulage par compression, et **en ce que** la surface de contact (70) du patin (66) est préférentiellement usinée.

12. Turbomachine d'aéronef (1) à double flux, comprenant une virole extérieure (16) de carter intermédiaire (14) selon l'une quelconque des revendications précédentes, ainsi qu'un bras (22) traversant radialement une veine secondaire (26) de la turbomachine, la turbomachine présentant un compartiment de soufflante (8b) ainsi qu'un compartiment inter-veine (8a) reliés par ledit bras (22), dont l'extrémité radialement externe (44) est plaquée contre la surface radialement externe (82) des deux extrémités circonférentielles (54), et contre les seconds organes de contact (68) associés à ces deux extrémités (84).

## Patentansprüche

1. Außenmantel (16) eines Zwischengehäuses (14) für ein Zweistrom-Turbinentriebwerk für ein Flugzeug, mit:
- einem stromabwärts gelegenen, ringförmigen Abschnitt (24), der mit einer Mantelöffnung (30) versehen ist, die radial durch den Mantel hindurchgeht und sich axial zu dessen stromabwärtiger Seite hin öffnet, wobei der stromabwärts gelegene Abschnitt einen stromabwärtigen ringförmigen Rand des Mantels (32) aufweist, dessen radial innere Fläche (36) einen ringförmigen hohlen Bereich (38) begrenzt, der radial nach innen offen ist, wobei der stromabwärtige ringförmige Rand (32) durch die Mantelöffnung (30) derart unterbrochen ist, dass er zwei umlaufende Endflächen (40) aufweist, die einander gegenüberliegen und dazwischen einen Aufnahmeraum (42) für ein radial äußeres Ende (44) eines Armes (22) begrenzen, der eine Sekundärader (26) des Turbinentriebwerks radial durchqueren soll;
- einem Verbindungsorgan (50), vorzugsweise durch eine Verbindungslochplatte (50) gebildet, das auf dem stromabwärts gelegenen, ringförmigen Abschnitt (24) des Mantels befestigt und radial nach innen bezüglich desselben angeordnet ist, wobei das Organ (50) ebenfalls dazu vorgesehen ist, an dem Arm (22) befestigt zu werden, und zwei umfangsseitige Enden (54) ausbildet, die jeweils den zwei umlaufenden Endflächen (40) des stromabwärtigen ringförmigen Randes des Mantels (32) zugeordnet sind, um jeweils zwei Verbindungsbereiche (56) zu definieren;
**dadurch gekennzeichnet, dass** der Mantel außerdem jedem Verbindungsbereich (56) zugeordnet eine luftdichtende und feuerbeständige Vorrichtung (60) umfasst.

2. Außenmantel (16) nach Anspruch 1, **dadurch gekennzeichnet, dass** die luftdichtende und feuerbeständige Vorrichtung (60) Folgendes umfasst:
- einen luftdichtenden und feuerbeständigen Abschnitt (62) mit:
• einem ersten Kontaktelement (66), das in dem ringförmigen hohlen Bereich (38) des stromabwärtigen ringförmigen Randes des Mantels (32) angeordnet ist, wobei dieses erste Kontaktelement über eine Kontaktfläche (70) mit einer Form verfügt, die zu der der radial inneren Fläche (36) komplementär ist, welche diesen ringförmigen hohlen Bereich (38) begrenzt;
• einem zweiten Kontaktelement (68), das aus dem ersten Kontaktelement (66) hervorragt und sich umlaufend oberhalb der umlaufenden Endfläche (40) des betreffenden Verbindungsbereichs in Richtung der anderen umlaufenden Endfläche (40) erstreckt, wobei sich das zweite Kontaktelement auf dem umlaufenden Ende (54) des betreffenden Verbindungsbereichs abstützt und dazu vorgesehen ist, zwischen diesem umlaufenden Ende (54) und dem radial äußeren Ende (44) des Armes (22) eingespannt zu werden.

3. Außenmantel nach Anspruch 2, **dadurch gekennzeichnet, dass** die luftdichtende und feuerbeständige Vorrichtung (60) außerdem Folgendes umfasst:
- eine elastische Vorspanneinrichtung (64), die das erste Kontaktelement (66) in den ringförmigen hohlen Bereich (38) drückt, wobei die elastische Vorspanneinrichtung (64) ein erstes Ende (64a), das auf dem umlaufenden Ende (54) des betreffenden Verbindungsbereichs befestigt ist, und ein gegenüberliegendes zweites Ende (64b) aufweist, das auf dem ersten Kontaktelement (66) befestigt ist.

4. Außenmantel nach Anspruch 3, **dadurch gekennzeichnet, dass** das erste Kontaktelement (66) ein Gleitschuh ist, dass das zweite Kontaktelement (68) eine Lamelle ist und dass die elastische Vorspanneinrichtung (64) eine Blattfeder ist.

5. Außenmantel nach Anspruch 4, **dadurch gekennzeichnet, dass** die Kontaktfläche des Gleitschuhs (66), lokal begrenzt auf gleicher Höhe mit diesem, einen gesamten Winkelsektor (S) der radial inneren Fläche (36) umschließt, die den ringförmigen hohlen Bereich (38) begrenzt, und dass der Gleitschuh (66) vorzugsweise einen radial inneren Abschnitt (74) außerhalb des ringförmigen hohlen Bereichs (38) aufweist.

6. Außenmantel nach Anspruch 4 oder Anspruch 5, **dadurch gekennzeichnet, dass** der Gleitschuh (66) in seinem radial nach außen bezüglich der Lamelle (68) gelegenen Abschnitt eine umlaufende Gleitschuh-Endfläche (76) aufweist, die sich im Wesentlichen in derselben Ebene wie die umlaufende Endfläche (40) des stromabwärtigen ringförmigen Randes des Mantels (32) befindet.

7. Außenmantel nach einem der Ansprüche 4 bis 6, **dadurch gekennzeichnet, dass** die Lamelle (68) einen Verbindungsbereich (88) mit dem Gleitschuh mit verringerter Stärke aufweist.

8. Außenmantel nach einem der Ansprüche 4 bis 7, **dadurch gekennzeichnet, dass** der luftdichtende und feuerbeständige Abschnitt (62) durch das Überlagern in radialer Richtung (93) von mindestens einer Schicht aus elastomerem Material (99), vorzugsweise aus elastomerem Silikonmaterial, und mindestens einer Faserschicht aus Keramik (100b), aus Glas (100a) oder aus meta-Aramid (100c) besteht.

9. Außenmantel nach dem vorhergehenden Anspruch, **dadurch gekennzeichnet, dass** der luftdichtende und feuerbeständige Abschnitt (62) mindestens eine Glasfaserschicht (100a) umfasst, die sich durch den Gleitschuh (66) und die Lamelle (68) erstreckt.

10. Außenmantel nach einem der Ansprüche 4 bis 9, **dadurch gekennzeichnet, dass** jedes umlaufende Ende (54) eine Vertiefung (80) aufweist, die eine Aufnahme für die Lamelle (68) der luftdichtenden und feuerbeständigen Vorrichtung (60) bildet.

11. Außenmantel nach einem der Ansprüche 4 bis 10, **dadurch gekennzeichnet, dass** der luftdichtende und feuerbeständige Abschnitt (62) durch Druckformung hergestellt wird, und dass die Kontaktfläche (70) des Gleitschuhs vorzugsweise maschinell bearbeitet ist.

12. Zweistrom-Turbinentriebwerk eines Flugzeugs (1) mit einem Außenmantel (16) eines Zwischengehäuses (14) nach einem der vorhergehenden Ansprüche, sowie einem radial durch eine Sekundärader (26) des Turbinentriebwerks hindurchgehenden Arm (22), wobei das Turbinentriebwerk über eine Gebläsekammer (8b) sowie eine Kammer zwischen den Adern (8a) verfügt, welche durch den Arm (22) verbunden sind, dessen radial äußeres Ende (44) gegen die radial äußere Fläche (82) der zwei umlaufenden Enden (54) und gegen die diesen beiden Enden (84) zugeordneten, zweiten Kontaktelemente (68) gedrückt wird.

## Claims

1. Outer shroud (16) of an intermediate casing (14) for a dual flow turbine engine for an aircraft, the shroud comprising:
- a downstream annular part (24) provided with a shroud opening (30) passing radially through the shroud and opening up axially downstream from the shroud, the downstream part comprising a downstream annular shroud edge (32), of which a radially internal surface (36) delimits a hollow annular zone (38) open radially inwards, the downstream annular edge (32) being interrupted by the shroud opening (30) so as to have two circumferential end surfaces (40) facing each other and delimiting a housing space (42) between them for a radially outer end (44) of an arm (22) that will pass radially through a fan flow (26) of the turbine engine;
- a connecting element (50), preferably formed by a perforated connection plate (50), fixed on the downstream annular part (24) of the shroud and arranged radially inwards from the shroud, the element (50) also being designed to be fixed to said arm (22) and forming two circumferential ends (54) fixed to the two circumferential end surfaces (40) of the downstream annular shroud edge (32), so as to define two junction zones (56) respectively;
**characterised in that** that the shroud also comprises an air sealing and fire resistance device (60), associated with each junction zone (56).

2. Outer shroud according to claim 1, **characterised in that** the air sealing and fire resistance device (60) comprises:
- an air sealing and fire resistance part (62) comprising:
- a first contact device (66) arranged in the hollow annular zone (38) of the downstream annular edge (32) of the shroud, this first contact element having a contact surface (70) with a shape complementary to the shape of said radially internal surface (36) delimiting this hollow annular zone (38);
- a second contact element (68) projecting from the first contact element (66) and extending circumferentially beyond the circumferential end surface (40) of the junction zone concerned, towards the other circumferential end surface (40), the second contact element bearing on the circumferential end (54) of the junction zone concerned, and that will be tightened between this circumferential end (54) and the radially external end (44) of the arm (22).

3. Outer shroud according to claim 2, **characterised in that** the air sealing and fire resistance device (60) also comprises:
- an elastic return means (64) bringing the first contact element (66) into contact inside the hollow annular zone (38), the elastic return means (64) comprising a first end (64a) fixed on the circumferential end (54) of the junction zone concerned, and a second opposite end (64b) fixed on the first contact element (66).

4. Outer shroud according to claim 3, **characterised in that** the first contact element(66) is a pad, **in that** the second contact element (16) is a ledge, and **in that** the elastic return means (64) is a plate spring.

5. Outer shroud according to claim 4, **characterised in that** the contact surface of the pad (66) matches the entire angular sector (S) of the radially internal surface (36) delimiting the hollow annular zone (38), locally at this pad (66), and **in that** this pad (66) preferably has a radially internal part (74) outside said hollow annular zone (38).

6. Outer shroud according to claim 4 or claim 5, **characterised in that** the pad (66) has a circumferential pad end surface (76) located approximately in the same plane as the circumferential end surface (40) of the downstream annular edge (32) of the shroud, in its part located radially outwards from the ledge (68).

7. Outer shroud according to any one of claims 4 to 6, **characterised in that** the ledge (68) comprises a reduced thickness connection zone (88) with the pad.

8. Outer shroud according to any one of claims 4 to 7, **characterised in that** said air sealing and fire resistance part (62) is formed by the superposition of at least one layer of elastomer material (99), preferably a silicone elastomer material, and at least one fibrous layer made of ceramic (100b), glass (100a) or meta-aramid, along the radial direction (93).

9. Outer shroud according to the preceding claim, **characterised in that** said air sealing and fire resistance part (62) comprises at least one glass fibre layer (100a) extending through the pad (66) and the ledge (68).

10. Outer shroud according to any one of claims 4 to 9, **characterised in that** each circumferential end (54) has a spot facing (80) forming a seat for the ledge (68) of the air sealing and fire resistance device (60).

11. Outer shroud according to any one of claims 4 to 10, **characterised in that** said air sealing and fire resistance part (62) is made by compression moulding, and **in that** the contact surface (70) of the pad (66) is preferably machined.

12. Dual flow turbine engine (1) for an aircraft, comprising an intermediate casing (14) outer shroud (16) according to any one of the preceding claims, and an arm (22) passing radially through a fan flow stream (26) of the turbine engine, the turbine engine having a fan compartment (8b) and an interflow-stream compartment (8a) connected by said arm (22), the radially outer end (44) of which is forced into contact with the radially external surface (82) of the two circumferential ends (54), and in contact with the second contact elements (68) associated with these two ends (84).
